# EUROPÄISCHE PATENTANMELDUNG

(11) **EP 3 244 641 A1**
(43) Veröffentlichungstag der Anmeldung: **15.11.2017**
(21) Anmeldenummer: 16205238.5
(22) Anmeldetag: 20.12.2016
(51) Int. Cl.: H04W 4/02, F04D 13/06, H04L 29/06, H04W 12/06

(54) **AUTORISIEREN EINER DATENKOMMUNIKATION MIT EINEM ELEKTRONISCH GESTEUERTEN PUMPENAGGREGAT**

(71) Anmelder: Grundfos Holding A/S, 8850 Bjerringbro (DK)
(72) Erfinder: MUNK, Flemming, 8800 Viborg (DK); Lyngesen Mogensen, Casper, 8832 Skals (DK); Hansen, Jakob, 4700 Næstved (DK)
(74) Vertreter: Patentanwälte Vollmann & Hemmer

(57) **Zusammenfassung**

Das Verfahren zum Autorisieren einer Datenkommunikation zwischen einem elektronisch gesteuerten Pumpenaggregat (1) und einem Bediengerät (12), welches zur drahtlosen Kommunikation mit dem Pumpenaggregat (1) ausgebildet ist arbeitet unter Verwendung eines externen datennetzgebundenen Servers (10). Es werden in einem 1. Schritt die Einbaustandortdaten (GPS 1) des Pumpenaggregates (1) über das Datennetz zum Server (10) übermittelt. Es werden dann ein Identifizierungscode des Bediengerätes (12) und die Standortdaten (GPS 2+3) des Bediengerätes (12) über das Datennetz zum Server übermittelt. Serverseitig wird geprüft, ob das Bediengerät (12) zur Datenkommunikation mit dem Pumpenaggregat (1) vorgesehen ist und ob das Bediengerät (12) innerhalb eines vorbestimmten räumlichen Bereichs (A) zum Pumpenaggregat befindlich ist wonach die Datenkommunikation für eine Zeit freigegeben oder gesperrt wird. (Fig. 1)

## Beschreibung

Die Erfindung betrifft ein Verfahren zum Autorisieren einer Datenkommunikation zwischen einer elektronisch gesteuerten Vorrichtung, insbesondere einem elektronisch gesteuerten Pumpenaggregat und einem Bediengerät sowie ein elektronisch gesteuertes Pumpenaggregat mit einer zur Ausführung dieses Verfahrens ausgebildeten Steuerelektronik.

Bei elektronisch gesteuerten Pumpenaggregaten zählt es zum Stand der Technik, nach Einbau oder auch bei einer späteren Wartung, Überprüfung oder dergleichen Betriebsparameter und/oder Betriebsdaten einzustellen, damit der oder die von der Steuerelektronik angesteuerten Pumpen im gewünschten Betriebsmodus und in der Regel energieoptimiert laufen. Dies kann durch das Vornehmen entsprechender Einstellungen an einem Bedienpanel der Pumpe erfolgen, vorteilhaft erfolgt dies jedoch heutzutage über ein Bediengerät, welches zur drahtlosen Kommunikation mit der elektronisch gesteuerten Vorrichtung, insbesondere dem elektronisch gesteuerten Pumpenaggregat ausgebildet ist.

Dabei hat es sich als zweckmäßig erwiesen, nicht für jede Vorrichtung ein gesondertes Bediengerät bereitzustellen, welches vergleichsweise aufwändig und teuer ist, sondern die Bedienung über allgemein verfügbare Bediengeräte wie Smartphones, Tablets oder mobile PCs durchzuführen, die alle für Anzeige, Bedienung und Kommunikation erforderlichen Voraussetzungen erfüllen. Ein Problem hierbei ist al-Personen Zugang erhalten, sei es, dass sie nur Daten abfragen oder aber auch dass Daten eingegeben werden. Es ist daher vor Beginn einer Datenkommunikation zwischen Bediengerät und Vorrichtung stets eine Autorisierung erforderlich.

Aus WO 2016/078686 A1 zählt es zum Stand der Technik, eine solche Autorisierung mittels eines externen datennetzgebundenen, typischerweise cloudbasierten Servers zu realisieren. Dieses Verfahren hat sich grundsätzlich bewährt, hat jedoch einige systembedingte Nachteile hinsichtlich der Autorisierungssicherheit. Da auch das Bediengerät drahtlos mit der Vorrichtung, sei es direkt oder indirekt über den Server kommuniziert, sind nicht autorisierte Zugriffe nicht mit der erforderlichen Sicherheit auszuschließen.

Vor diesem Hintergrund liegt der Erfindung die Aufgabe zu Grunde, ein Verfahren zum Autorisieren einer Datenkommunikation zwischen einer elektronischen gesteuerten Vorrichtung, insbesondere einem elektronisch gesteuerten Pumpenaggregat und einem Bediengerät zu verbessern, insbesondere in höherem Maße sicherzustellen, dass eine Datenkommunikation nur erfolgt, wenn diese auch bestimmungsgemäß zwischen einer Bedienperson mit dem Bediengerät und der Vorrichtung vorgesehen ist. Im Weiteren soll ein elektronisch gesteuertes Pumpenaggregat bereitgestellt werden, welches zum Einsatz mit dem erfindungsgemäßen Autorisierungsverfahren geeignet ist.

Der verfahrensmäßige Teil der vorliegenden Erfindung wird durch die in Anspruch 1 angegebenen Verfahrensmerkmale gelöst, die Ausbildung eines Pumpenaggregates hierzu ist durch die in Anspruch 17 angegebenen Merkmalen gekennzeichnet. Vorteilhafte Ausgestaltungen der Erfindung ergeben sich aus den Unteransprüchen, der nachfolgenden Beschreibung und den Zeichnungen.

Das erfindungsgemäße Verfahren zum Autorisieren einer Datenkommunikation zwischen einer elektronisch gesteuerten Vorrichtung, insbesondere einem elektronisch gesteuerten Pumpenaggregat und einem Bediengerät, welches zur drahtlosen Kommunikation mit der Vorrichtung ausgebildet ist und bei dem ein externer datennetzgebundener vorzugsweise cloudbasierter Server Verwendung findet gliedert sich darin auf, dass zunächst die Einbaustandortdaten der Vorrichtung über das Datennetz zum Server übermittelt werden. Diese Einbaustandortdaten geben nicht nur den Einbauort an sondern können über den Einbauort auch die Vorrichtung selbst definieren.

Zum Autorisieren der Datenkommunikation werden ein bediengeräteseitiger Identifizierungscode sowie die aktuellen Standortdaten des Bediengerätes über das Datennetz zu dem Server übermittelt.

Serverseitig wird dann zunächst anhand des Identifizierungscodes des Bediengerätes ermittelt, ob es sich um ein Bediengerät handelt, welches grundsätzlich zur Datenkommunikation mit der Vorrichtung vorgesehen, d. h. herstellerseitig bestimmt ist.

In einem weiteren Schritt wird dann serverseitig anhand der Einbaustandortdaten und der aktuellen Standortdaten des Bediengerätes ermittelt, ob sich das Bediengerät in einem vorbestimmten räumlichen Bereich zu der Vorrichtung befindet.

Die Datenkommunikation zwischen der Vorrichtung und dem Bediengerät wird zumindest zeitweise, d.h. für eine vorbestimmte Zeitdauer lang freigegeben, wenn zum einen anhand des Identifizierungscodes des Bediengerätes die grundsätzliche Bestimmung zur Datenkommunikation mit der Vorrichtung festgestellt und im Weiteren aufgrund der räumlichen Anordnung zwischen Einbaustandort und Bediengerät im Speziellen festgestellt, ob sich das Bediengerät in dem vorbestimmten räumlichen Bereich zum Einbaustandort der Vorrichtung befindet.

Das erfindungsgemäße Verfahren hat gegenüber dem bekannten Autorisierungsverfahren den wesentlichen Vorteil, dass neben der Voraussetzung, dass das Bediengerät überhaupt zur Datenkommunikation mit der zu bedienenden Vorrichtung vorgesehen ist, es nur dann autorisiert wird, wenn es in ausreichender Nähe zur Vorrichtung angeordnet ist. Dies hat den ganz erheblichen Vorteil, dass zum einen Datenkommunikation mit außerhalb des vorbestimmten räumlichen Bereichs liegenden Vorrichtungen zuverlässig verhindert wird, was sowohl Fehlbedienungen vermeidet als auch unzulässige Datenkommunikationen mit Bediengeräten nicht berechtigter Personen. Das Autorisieren der Datenkommunikation wird zuverlässiger und wesentlich sicherer gegenüber unberechtigten Versuchen, in die Steuerung der Vorrichtung einzudringen. Das erfindungsgemäße Verfahren hat darüber hinaus noch den ganz erheblichen Vorteil, dass die Standortdaten verschiedener Vorrichtungen servermäßig erfasst sind und damit auch herstellerseitig oder seitens eines wartenden Unternehmens ein vollständiger Überblick über die räumliche Verteilung der Vorrichtungen herstellbar ist. Dies ist insbesondere für Pumpenaggregate von Vorteil, da es sich hierbei um Maschinen handelt, die in baugleicher oder bauähnlicher Form in großen Stückzahlen über die Einsatzorte verteilt sind, ohne dass deren räumliche Verteilung bekannt ist.

Unter Pumpenaggregat im Sinne der vorliegenden Erfindung ist nicht nur eine motorisch angetriebene Kreiselpumpe oder Verdrängerpumpe mit einer elektronischen Steuerung zu verstehen, sondern es können auch mehrere Pumpen mit mehreren gesonderten Antrieben, insbesondere elektromotorischen Antrieben darunter zu verstehen sein, die einer gemeinsamen elektronischen Steuerung zugeordnet sind, wie beispielsweise Boosterpumpen. Bei der elektronischen Steuerung handelt es sich typischer- aber nicht notwendigerweise um einen Stromrichter/Frequenzumrichter, über welchen die Motordrehzahl in weiten Bereichen und damit das Leistungsspektrum der angeschlossenen Pumpe steuerbar ist.

Zwar genügt in einfachster Form die serverseitige Speicherung der Einbaustandortdaten der einzelnen Vorrichtungen um diese als solche zu identifizieren und eine eindeutige Zuordnung mittels eines Bediengerätes zu ermöglichen, doch ist es besonders vorteilhaft, wenn zusätzlich zu den Einbaustandortdaten ein Identifizierungscode der Vorrichtung über das Datennetz zum Server übermittelt wird. Ein solcher Identifizierungscode ist insbesondere dann vorteilhaft, wenn eine Vielzahl von Vorrichtungen unterschiedlichen Typs zur Autorisieren sind, da über den Identifizierungscode individuelle Zugangsberechtigungen auch gruppenweise also beispielsweise für typgleiche Pumpenaggregate realisiert werden können. Die Übermittlung eines Identifizierungscodes hat darüber hinaus den wesentlichen Vorteil, dass hersteller- oder betreiberseitig eine eindeutige Zuordnung zwischen der Vorrichtung und dem Standort möglich ist. Dies ermöglicht beispielsweise das neben den Identifizierungscode auch Einstellungen, Parameter, Betriebsdaten oder dergleichen serverseitig gespeichert werden, sodass im Falle eines Defektes, insbesondere eines vollständigen Defektes wie es beispielsweise durch Brand oder Wassereinbruch hervorgerufen sein kann, anhand der Einbaudaten serverseitig ermittelt werden kann, um welchen Typ von Vorrichtung es sich handelt, d. h. eine entsprechende Austauschvorrichtung verfügbar zu machen und dann die serverseitig gespeicherten Einstellungen auf die Austauschvorrichtung zu übertragen, sodass diese quasi eins zu eins einschließlich sämtlicher Einstellungen die defekte Vorrichtung ersetzt. Dies setzt lediglich voraus, dass eine Bedienperson mit dem Bediengerät nah genug an die defekte Vorrichtung herantritt, damit die entsprechende serverseitige Zuordnung erfolgen kann. Es versteht sich, dass dieses Verfahren sowohl das Autorisieren an sich als auch das vorbeschriebene Austauschverfahren im Falle eines Defektes der Vorrichtung durch eine entsprechende auf dem Bediengerät, insbesondere über Smartphone laufende Softwareapplikationen (App) ablaufgesteuert wird, wie dies heutzutage bei Geräteinstallationen zum Stand der Technik zählt.

Es versteht sich weiterhin, dass das vorbeschriebene Autorisierungsverfahren beim Austausch einer defekten Vorrichtung nicht anwendbar ist, da davon auszugehen ist, dass die defekte Vorrichtung auch nicht mehr kommunikationsfähig ist. Für diesen speziellen Fall wird serverseitig eine gesonderte Zugangsberechtigung des dann an diesem Standort zugeordneten Bediengerätes erfolgen, welches den Datenzugang zu den seitens der defekten Vorrichtung serverseitig abgelegten Daten und deren Einspeisung in die Austauschvorrichtung gewährleistet.

Besonders vorteilhaft ist es, wenn die Einbaustandortdaten automatisiert ermittelt und über das Datennetz zum Server übermittelt werden, und zwar vorteilhaft mittels eines Navigationssattelitensystems. Grundsätzlich wird hier ein geeignetes Navigationssattelitensystem verwendet werden. Derzeit meist verbreitet ist das NAVSTAR-GPS, das deshalb vorteilhaft angewendet werden wird, da zum einen eine hohe Verfügbarkeit gegeben ist und zum anderen die erforderlichen Hardwarebauteile kostengünstig verfügbar sind. Grundsätzlich kann die Ermittlung der Standortdaten auch über andere Navigationssatellitensysteme, wie beispielsweise Glonass, Beidou oder Galileo erfolgen, auch können an unterschiedlichen Standorten unterschiedliche Ortungssysteme Verwendung finden.

Bei Vorrichtungen, insbesondere Pumpenaggregaten, die an einem Standort angeordnet sind, an dem kein oder schlechter Empfang der Signale des Navigationssattelitensystems gegeben ist kann vorteilhaft eine manuelle Abfrage- und Eingabemöglichkeit an der Vorrichtung selbst vorgesehen sein wobei die Standortdaten dann vorteilhaft mittels des Bediengerätes ermittelt werden, das mit einem solchen Ortungssystem ausgerüstet ist.

Insbesondere dort wo die Empfangssignale des Navigationssattelitensystems schwach und/oder ungenau sind, so wie dies in dicht besiedelten Regionen der Fall ist, also eine exakte Unterscheidung der Standortdaten schwierig ist, kann es vorteilhaft sein, die Standortdaten, sei es die Einbaustandortdaten der Vorrichtung oder auch die des Gerätes durch alternative oder zusätzliche Ortung, z. B. WLAN-Netzortung und/oder Mobilfunknetzortung zu ermitteln. Solche unterstützenden und gegebenenfalls auch alternativen Ortungsverfahren sind unter dem Begriff A-GPS bekannt (Assisted Global Positioning System), auf die insoweit verwiesen wird.

Um festzustellen, ob sich ein Bediengerät in einem vorbestimmten räumlichen Bereich zur Vorrichtung befindet, wird anhand der Standortdaten des Bediengerätes und der Einbaustandortdaten der Abstand zwischen Vorrichtung und Bediengerät ermittelt und dann im Weiteren ermittelt, ob der Abstand innerhalb eines zuvor festgelegten Maximalabstandes liegt. Dieser Maximalabstand kann gegebenenfalls individuell variiert werden, sei es um bei hoher Vorrichtungsdichte eine ausreichende Differenzierung zu ermöglichen oder um einen Bedienzugang ausnahmsweise aus einem entfernteren Raum zu ermöglichen. Dabei können gemäß der Erfindung die Bereiche auch GPS-mäßig bestimmt werden, sodass beispielsweise in einer Richtung zur Vorrichtung ein größerer Abstand bestehen kann als in einer anderen. Dabei spielt es grundsätzlich keine Rolle, ob diese Bestimmung serverseitig oder bediengerätseitig erfolgt. Grundsätzlich ist es auch denkbar, diese vorrichtungsseitig erfolgen zu lassen. Dies wird stets einer Abwägung zwischen zur Verfügung stehender Rechenleistung einerseits und Signalqualität zu Datennetzen des Servers andererseits sein.

Zweckmäßigerweise wird der vorbestimmte räumliche Bereich, in dem das Bediengerät zur Vorrichtung befindlich sein muss bzw. der zulässige Abstand zwischen Vorrichtung und Bediengerät nicht konstant sondern in Abhängigkeit der Genauigkeit der übermittelten Standortdaten festgelegt bzw. angepasst werden. So kann bei der GPS-Ortung die Genauigkeit anhand der Anzahl der empfangenen Sattelitensignale festgestellt werden. Bei zusätzlicher oder ergänzender Ortung über WLAN-Netze und/oder Mobilfunknetz wird hier als Maß die Empfangssignalstärke dienen.

Um die grundsätzliche Zulässigkeit einer Autorisierung zwischen einer Vorrichtung und einem Bediengerät zu gewährleisten, ist serverseitig vorteilhaft eine Datenbank mit Identifizierungscodes der Vorrichtungen und Identifizierungscodes der Bediengeräte angelegt, wobei gleichzeitig die Zuordnungen angegeben sind, in welchen eine Datenkommunikation vorgesehen ist. Dabei kann die Datenkommunikation vorteilhaft stufenweise freigegeben werden, sodass in einer ersten Stufe die Zulässigkeit der Datenkommunikation zwischen einem Bediengerät und einer Vorrichtung überhaupt festgelegt und in einer zweiten Stufe festgelegt wird, welche Daten in welchem Umfang ausgetauscht werden dürfen. So ist insbesondere bei der Datenkommunikation mit Pumpenaggregaten vorteilhaft, eine untergeordnete Gruppe auf die Datenkommunikation zur Anzeige und Abfrage von Daten der Vorrichtung insbesondere des Pumpenaggregats beschränken und eine weitere untergeordnete Gruppe mit der Datenkommunikation zur Einstellung der Vorrichtung vorzunehmen. So können mit dem erfindungsgemäßen Verfahren Autorisierungen zur Datenkommunikation realisiert werden, welche nur zur Abfrage von Daten und andere, welche zur Abfrage und Eingabe von Daten vorgesehen sind. Insbesondere bei einer solchen Konstellation ist es vorteilhaft, den Gruppen nicht nur unterschiedliche Datenkommunikationen sondern auch unterschiedliche Zugangsprioritäten zuzuordnen. So wird es typischerweise zweckmäßig sein, der Gruppe von Bediengeräten, welche zum Einstellen einer Vorrichtung vorgesehen ist, eine höhere Priorität als einem solchen zuzuordnen, welches nur zur Abfrage von Daten der Vorrichtung vorgesehen ist. Auch ist es denkbar, die Gruppen hinsichtlich der zulässigen Einstelldaten nochmals zu differenzieren, auch dann ist es sinnvoll, die Zugangsprioritäten entsprechend zu differenzieren.

Um sicherzustellen, dass mit dem Bediengerät eine Datenkommunikation mit der Vorrichtung auch nur dann erfolgt, wenn sich dieses in dem vorbestimmten Bereich zu der Vorrichtung befindet, andererseits jedoch nicht ständig die Standortdaten abfragen zu müssen, ist es gemäß einer Weiterbildung des erfindungsgemäßen Verfahrens vorgesehen, dass die Ermittlungen zur Feststellung der Zulässigkeit der Datenkommunikation eines Bediengerätes mit einer Vorrichtung sowie zur Feststellung, ob sich diese Bediengerät in einem vorbestimmten räumlichen Bereich zur Vorrichtung befindet, in zeitlichen Abständen wiederholt werden, wonach die Datenkommunikation weiter freigegeben oder unterbrochen wird oder gesperrt bleibt. Hiermit können auch Fehlbedienungen wirksam verhindert werden, da sie quasi ein selbsttätiges Ausloggen des Bediengeräts bei der Datenkommunikation mit der Vorrichtung zeit- und ortsabhängig bewirken.

Anstelle der vorgenannten Überprüfung in zeitlichen Abständen kann das erfindungsgemäße Verfahren so ausgestaltet sein, dass die Datenkommunikation für ein vorbestimmtes Zeitintervall freigegeben wird, wenn serverseitig das Bediengerät zur Datenkommunikation als zulässig identifiziert worden ist und andererseits dieses in einem vorbestimmten räumlichen Bereich zu der Vorrichtung ermittelt werden konnte. Das Zeitintervall wird dann zweckmäßigerweise so gelegt, dass, wenn es sich um ein Bediengerät handelt, welches nur zur Datenabfrage vorgesehen ist, die entsprechenden Betriebsdaten für eine ausreichende Zeit angezeigt oder nur kurzzeitig abgefragt und gespeichert werden wohingegen bei einem Bediengerät, das zur Einstellung zugelassen ist, ein längeres Zeitintervall freigegeben ist, welches es der Bedienperson ermöglicht, diese Einstellung in angemessener Zeit durchzuführen.

Weiterhin hat es sich als vorteilhaft erwiesen, wenn die Vorrichtung, wenn sie im Betrieb befindlich ist, in zeitlichen Abständen sowohl ihren Identifizierungscode als auch ihre Einbaustandortdaten an den Server übermittelt. Hierbei können gegebenenfalls auch Betriebs- und/oder Einstellungsdaten übermittelt werden, wobei die Übermittlung der Einstellungsdaten vorteilhaft immer nach erfolgter Einstellung erfolgt. Eine solche Datenübermittlung gewährt nicht nur die Einbaustandortüberwachung der Vorrichtung sondern darüber hinaus auch eine zumindest teilweise Betriebsüberwachung, welche gleichzeitig eine Überprüfung der Datenkommunikation zwischen Vorrichtung und Server darstellt.

Grundsätzlich spielt es für die Durchführung des erfindungsgemäßen Verfahrens keine Rolle, ob die Datenkommunikation zwischen Bediengerät und Vorrichtung unmittelbar oder mittelbar über den datennetzgebundenen Server erfolgt. Besonders vorteilhaft ist es jedoch, wenn die Datenkommunikation zwischen Bediengerät und Vorrichtung unmittelbar erfolgt, dies kann drahtlos, optisch, akustisch oder per Funk erfolgen. Letzteres ist insbesondere für Einstellungszwecke von Vorteil, da der direkte Übertragungsweg üblicherweise die kürzeste und sicherste Datenverbindung darstellt. Im Übrigen kann diese Verbindung, über welche eine vergleichsweise große Datenmenge ausgetauscht werden kann, an die örtlichen Umgebungsbedingungen angepasst sein. So wird beispielsweise einer Infrarotkommunikation der Vorzug zu geben sein, wenn die zur Verfügung stehenden Funkkanäle häufig gestört oder überlastet sind oder in explosionsgeschützten Bereichen.

Da sowohl Bediengerät als auch Vorrichtung zumindest zum Zwecke der Autorisierung der Datenkommunikation mit einem externen datennetzgebundenen Server verbunden sein müssen, kann es sinnvoll sein, auch die übrige Datenkommunikation zwischen Vorrichtung und Bediengerät über den Server laufen zu lassen, vorzugsweise jeweils drahtlos per Funk. Es ist jedoch auch denkbar, die Vorrichtung fest mit dem Netzwerk zu verdrahten und lediglich das Bediengerät drahtlos kommunizieren zu lassen. Die Kommunikation über den Server hat weiterhin den Vorteil, dass Rechentätigkeiten, sei es zur Autorisierung oder zur Auswertung von Betriebsdaten oder dergleichen serverseitig erfolgen können, wo in der Regel eine ausreichende Rechenkapazität zur Verfügung steht

Als Server kann ein softwareimplementierter Server, also ein auf einem Computer laufendes Programm verstanden werden oder eine Computerhardware mit Festspeicher und Software, welche Datenbankfunktionen, d. h. Datenspeicher und Datenbanksoftware andererseits und Rechenoperationen anderseits beinhaltet. Dabei spielt es für die Cloudbasiertheit des Servers keine Rolle, ob dieser in irgendeinem Rechenzentrum dieser Welt oder auf einem Rechner des Herstellers läuft.

Vorteilhaft kann es sein, wenn der räumliche Bereich, insbesondere der Abstand, in dem das Bediengerät zur Vorrichtung befindlich sein muss, um zur Datenkommunikation autorisiert zu werden, entweder vorrichtungsseitig oder serverseitig festgelegt und insbesondere einstellbar ist. So kann individuellen Gegebenheiten Rechnung getragen werden, beispielsweise wenn eine Vielzahl von Vorrichtungen in unmittelbarer Nähe zueinander betrieben werden oder wenn beispielsweise aufgrund der schlechten Signalqualität der GPS-Signale in unmittelbarer Nähe der Vorrichtung das Bediengerät in gewissem Abstand davor autorisiert werden muss, beispielsweise im Freien vor einem Gebäude.

Das erfindungsgemäße Verfahren wird bediengerätseitig vorteilhaft auf einem Smartphone, Tablet oder Notebook ausgeführt, wobei eine Softwareapplikation vorgesehen ist, welche auf dem Bediengerät läuft und welche die verfahrensgemäße Kommunikation mit dem Server und der Vorrichtung durchführt. Dabei kann der Identifizierungscode des Bediengerätes vorteilhaft in der Softwareapplikation festgelegt sein, da dann allein über die Softwareapplikation Bedienergruppen gebildet werden können. Die Standortdaten werden dabei bei Verwendung eines Smartphones oder Tablet mit eingebautem GPS-Empfänger über diese Softwareapplikation an den Server übermittelt. Ein GPS-Empfänger kann gegebenenfalls extern angeschlossen sein, typischerweise bei Notebooks, die häufig keinen eigenen GPS-Empfänger aufweisen.

Das erfindungsgemäße Verfahren ist insbesondere zur Verwendung mit Pumpenaggregaten von Vorteil, beschränkt sich jedoch hierauf nicht. Als prädestinierte Anwendung ist hier insbesondere die Autorisierung der Datenkommunikation zwischen einem Bediengerät und einer Vorrichtung zur Bakterienüberwachung im Wasser zu nennen, wie es von der Anmelderin unter der Bezeichnung BACNON angeboten wird.

Das erfindungsgemäße Verfahren wird vorteilhaft in Verbindung mit einem elektronisch gesteuerten Pumpenaggregat eingesetzt, welches eine Steuerelektronik aufweist, mit der mindestens ein Elektromotor ansteuerbar ist, der eine Pumpe, insbesondere eine Kreiselpumpe antreibt. Derartige Pumpenaggregate finden sich beispielsweise in Heizungsanlagen aber auch in Abwasseranlagen, in Druckerhöhungsanlagen, in Wasserwerken, auf Baustellen und dergleichen. Die Steuerelektronik ist dabei typischerweise Teil einer Stromrichterelektronik, insbesondere Frequenzumrichterelektronik, mit welcher die Drehzahl des Elektromotors und somit der darin angeschlossenen Pumpe in weiten Bereichen veränderbar ist.

Ein solches Pumpenaggregat ist mit Mitteln zur Datenkommunikation mit mindestens einem externen netzwerkgebundenen Server ausgestattet und dadurch gekennzeichnet, dass pumpenaggregatseitig Mittel zur Positionsbestimmung vorgesehen sind. Dies können vorteilhaft ein GPS-Empfänger sein, alternativ oder zusätzlich ein WLAN-Empfänger sowie alternativ oder zusätzlich ein Mobilfunkempfänger. Dabei ist es besonders vorteilhaft, wenn mehrere solcher Empfangsmodule vorgesehen sind, damit eine Positionsbestimmung auch durchführbar ist, wenn Empfangssignale schwach sind oder wenn eine weitere Differenzierung erforderlich ist.

Da Pumpenaggregate der in Rede stehenden Art häufig an schwer zugänglichen und durch Betondecken oder dergleichen abgeschirmten Orten befindlich sind, ist es vorteilhaft, wenn neben dem oder den Empfangsmodulen, welche selbsttätig den Standort ermitteln können, die Steuerelektronik dazu ausgebildet ist, dass die Positionsdaten auch manuell eingegeben werden können. Dies kann grundsätzlich zumindest bei Erstinstallation dann auch durch das Bediengerät unter Einsatz der entsprechenden Softwareapplikation erfolgen. Es kann in diesem Zusammenhang vorteilhaft sein, neben den Empfängern zur Positionsbestimmung das Pumpenaggregat mit einem Infrarot- oder Bluetooth-Empfänger auszustatten um sicherstellen zu können, dass das installierende Bediengerät in unmittelbarer Nähe befindlich ist. Diese einmal eingegebenen Positionsdaten werden dann vorteilhaft in der Steuerelektronik des Pumpenaggregates gespeichert wobei ein Reset-Schalter vorgesehen sein kann, welcher diese Daten löscht, sobald der Deckel des Klemmenkastens geöffnet wird, also das Pumpenaggregat vom Netz getrennt wird.

Vorteilhaft sind dabei nicht nur die Positionsdaten sondern auch die Bereichsgrößen eingebbar. Letzteres erfolgt vorteilhaft auch nur einmalig applikationsgesteuert bei Erstinstallation.

Die Erfindung ist nachfolgend anhand eines Ausführungsbeispiels näher erläutert. Es zeigen:
- Fig. 1: in stark vereinfachter Symboldarstellung ein datennetzgebundenes Pumpenaggregat und Bediengerät zur Datenkommunikation,
- Fig. 2: das Display des Bediengeräts in Position GPS 3 der Figur 1,
- Fig. 3: das Display des Bediengeräts in Position GPS 2 der Figur 1 und
- Fig. 4: ein Verfahrensablaufdiagramm zum Autorisieren der Datenkommunikation zwischen einem elektronisch gesteuerten Pumpenaggregat und einem Bediengerät.

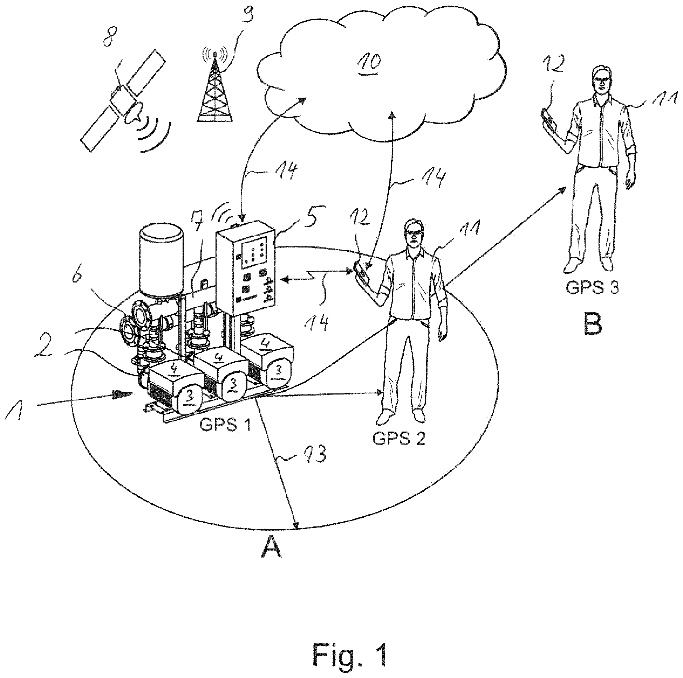

In Figur 1 ist ein Pumpenaggregat 1 dargestellt, welches drei parallel geschaltete Kreiselpumpen 2 beinhaltet, die jeweils über einen Elektromotor 3 mit zugeordnetem Frequenzumrichter 4 angetrieben werden und die über eine zentrale elektronische Steuerung 5 betrieben bzw. koordiniert werden. Die elektronische Steuerung 5 ist hier als externe Baugruppe angeordnet, es versteht sich, dass diese auch Teil einer Steuerelektronik eines Frequenzumrichters 4 sein kann, wenn beispielsweise eine Kreiselpumpe 2 mit angeschlossenen Elektromotor 3 einzeln betrieben wird.

Das dargestellte Pumpenaggregat fördert aus einer Saugleitung 6 in eine Druckleitung 7 und kann Teil eines Abwasser- oder Frischwassersystems sein. Die elektronische Steuerung 5 weist einen GPS-Empfänger auf, welcher in an sich bekannter Weise Daten von Satelliten empfängt und anhand deren Laufzeitunterschieden die Position des Pumpenaggregates 1 bestimmt. Die elektronische Steuerung 5 weist weiter einen Mobilfunkempfänger auf, welcher Mobilfunkdaten von einem Mobilfunksender 9 zumindest empfängt, dies ebenfalls zur Standortbestimmung bzw. zu einer gegebenenfalls erforderlichen Genauigkeitserhöhung der GPS-Ortung.

Weiter weist die elektronische Steuerung ein WLAN-Modul auf, über welches eine Datenverbindung mit einem externen datennetzverbundenen Server 10 herstellbar ist, der hier als Cloud 10 symbolisiert ist.

Die Position des Pumpenaggregates, d. h. der Einbaustandort ist in Figur 1 mit GPS 1 bezeichnet und entspricht hier beispielhaft 9,34320° östlicher Länge und 56,57949° nördlicher Breite.

Eine Bedienperson 11 befindet sich am Standort GPS 2, der beispielhaft 9,34324° östlicher Länger und 56,57952° nördlicher Breite beträgt. Die Bedienperson 11 trägt eine Bediengerät 12 in Form eines Smartphones in der Hand. Unter GPS 3 ist dieselbe Bedienperson 11 mit dem Bediengerät 12 dargestellt, allerdings in einer Position von 9,34291° östlicher Länge und 56,57949° nördlicher Breite.

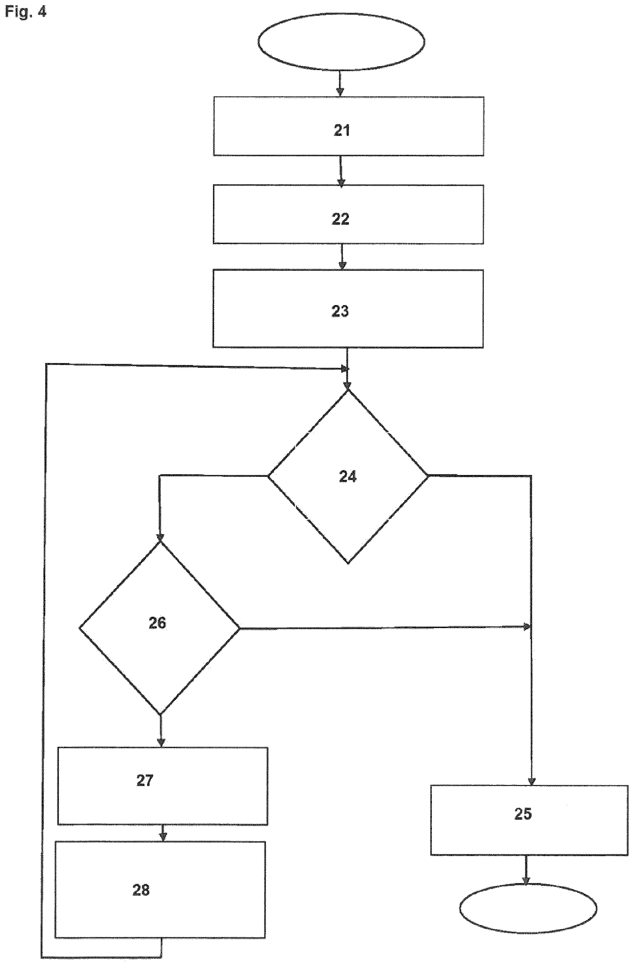

Anhand des Ablaufdiagrammes der Figur 4 ist dargestellt, wie die Autorisierung einer Datenkommunikation zwischen der elektronischen Steuerung 5 des Pumpenaggregates 1 und dem Bediengerät 12 mit Hilfe der Positionsbestimmungen sowie des cloudbasierten Servers 10 erfolgt.

Nachdem das Pumpenaggregat 1 eingebaut und angeschlossen ist, wird die elektronische Steuerung 5 durch eine Bedienperson eingeschaltet bzw. zum Ablauf eines Autorisierungsverfahrens gesteuert. In einem 1. Schritt 21 wird pumpenaggregatseitig der Einbaustandort ermittelt, d. h. mit Hilfe des eingebauten GPS-Empfängers werden die Einbaustandortdaten ermittelt. Dabei ist die elektronische Steuerung 5 so ausgelegt, dass dann, wenn die Genauigkeit des GPS-Empfangs einen vorgegebenen Mindestwert (Anzahl der empfangenen Satelliten) unterschreitet, zusätzlich oder sogar alternativ eine Standortbestimmung unter Zugrundelegung des Mobilfunkempfangs und/oder von WLAN-Netzen erfolgt, wie dies bei Assisted GPS an sich bekannt ist, auf das in diesem Zusammenhang verwiesen wird. Sobald die Einbaustandortdaten pumpenaggregatseitig ermittelt sind, werden diese zu dem cloudbasierten Server 10 drahtlos, d. h. über WLAN und dann über das Internet übermittelt, zusammen mit einem Identifizierungscode des Pumpenaggregates.

Anhand dieser mit GPS 1 bezeichneten Einbaustandortdaten wird serverseitig in einem zweiten Schritt 22 ein Bereich A ermittelt, welcher den räumlichen Bereich definiert, in dem sich das Bediengerät 12 befinden muss um zu einer Datenkommunikation autorisiert zu werden. Dieser Bereich A ist durch einen Abstand 13 definiert, der den Radius eines Kreises um den Einbaustandort GPS 1 definiert.

In einem dritten Schritt 23 wird nun bediengeräteseitig der Identifizierungscode des Bediengerätes 12 sowie der Standort des Bediengerätes 12 übermittelt. Auch bediengeräteseitig wird der Standort primär über GPS-Ortung, sekundär jedoch gegebenenfalls auch über Mobilfunk- und WLAN-Ortung (A-GPS) ergänzt.

In einem vierten Schritt 24 wird dann serverseitig überprüft, ob der Identifizierungscode des Bediengerätes 12 derjenige ist, der zur Datenkommunikation mit der elektronischen Steuerung 5 des Pumpenaggregats 1 zugelassen ist. Hierzu sind serverseitig datenbankmäßig sowohl die Identifizierungscodes der möglichen Pumpenaggregate als auch die Identifizierungscodes der möglichen Bediengeräte erfasst und zugeordnet.

Wenn bei der serverseitigen Prüfung 24 festgestellt wird, dass das Bediengerät 12 nicht zur Datenkommunikation mit dem Pumpenaggregat 1 vorgesehen ist, wird der Autorisierungsprozess im Schritt 25 abgebrochen und der Zugang zur Datenkommunikation versagt.

Ergibt die Prüfung 24 jedoch, dass es sich um ein Bediengerät 12 handelt, welches zur Datenkommunikation mit dem Pumpenaggregat 1 bestimmt ist, dann wird in einem zweiten Prüfschritt 26 serverseitig überprüft, ob sich das Bediengerät 12 in den vorbestimmten Bereichen A befindet, der durch den Abstand 13 um den Einbaustandort GPS 1 herum definiert ist. Ergibt die Prüfung wie bei dem Standort GPS 3, dass das Bediengerät 12 außerhalb des Bereichs A, nämlich in dem den Bereich A umgebenden Bereich B angeordnet ist, dann wird im Schritt 25 der Datenzugang gesperrt und das Autorisierungsverfahren beendet. Wird jedoch festgestellt, wie beispielsweise beim Standort GPS 2, dass dieser innerhalb des Bereichs A liegt, dann wird eine Datenkommunikation zwischen dem Pumpenaggregat 1 und dem Bediengerät 12 in einem Schritt 27 autorisiert, wobei die Datenkommunikation 14 zwischen Bediengerät 12 und der elektronischen Steuerung 5 des Pumpenaggregates 1 unmittelbar erfolgt. Alternativ kann diese Datenkommunikation auch nur indirekt, d. h. über den Server 10 vorgesehen sein.

In einem Schritt 28, der nach einer vorbestimmten Zeit erfolgt, werden die Prüfungen 24 und 26 wiederholt um sicherzustellen, dass eine Datenkommunikation nur erfolgt, solange das Bediengerät 12 innerhalb des Bereichs A befindlich ist. Dabei kann zur Vereinfachung des Verfahrens gegebenenfalls auf eine Prüfung 24 verzichtet werden.

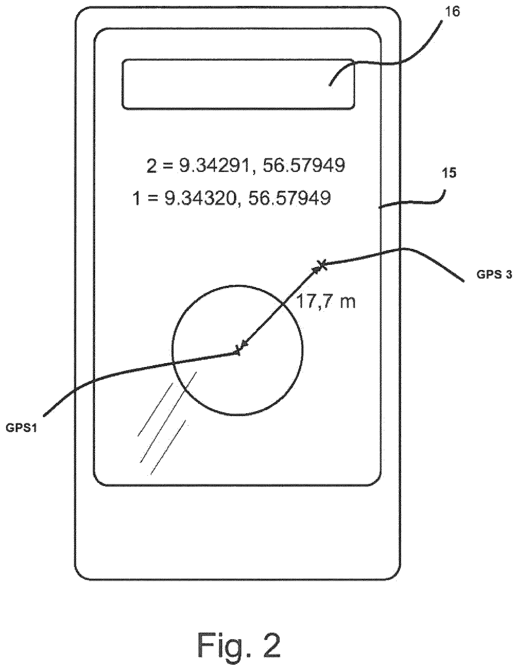

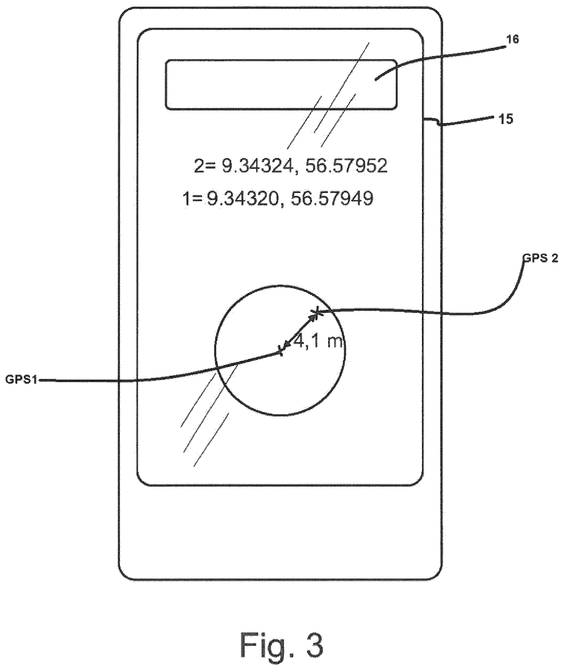

Anhand der Figuren 2 und 3 ist dargestellt, wie das Display des Bediengerätes 12, welches hier ein Smartphone ist, auf dem eine entsprechende Softwareapplikation läuft, aussieht. In der unteren Hälfte des Displays ist der Einbaustandort GPS 1 markiert sowie der Bereich A durch einen Kreis mit dem Abstand 13 um den Einbaustandort GPS 1. Weiterhin sind im oberen Drittel die GPS-Koordinaten des Pumpenaggregats 1 sowie die des Bediengeräts 2 angegeben. Darüber ist ein Anzeigefeld 16, welches bei Autorisierung grün und bei Nichtautorisierung rot dargestellt ist mit einem entsprechenden Text darin "Autorisierung erfolgt" (im gründen Feld) oder "Autorisierung versagt" (im roten Feld).

In dem vorliegenden Ablaufdiagramm ist lediglich eine Prüfung 24 vorgesehen, welche prüft, ob das Bediengerät 12 zur Bedienung des Pumpenaggregates 1 bestimmt ist. Diese Prüfung 24 kann in zwei oder mehrere Unterprüfungen unterteilt sein, wenn beispielsweise eine erste Gruppe von Bediengeräten gebildet ist, die ausschließlich zur Datenkommunikationen bestimmt sind, welche Betriebsdaten des Pumpenaggregates 1 erfasst und anzeigt, wohingegen eine zweite Gruppe gebildet sein kann, mit welcher die Betriebsparameter der Pumpe einstellbar sind und wobei eine dritte Gruppe, sogenannte Master-Bediengeräte vorgesehen sein kann, mit der sämtliche einstellbare Daten des Pumpenaggregates einstellbar sind. Dabei erfolgt die Gruppenzuordnung nicht über das Bediengerät 12 selbst, sondern ist softwareimplementiert, d. h. mittels der Softwareapplikation, mit welcher das Bediengerät 12 mit der elektronischen Steuerung 5 des Pumpenaggregates 1 einerseits sowie dem Server 10 andererseits kommuniziert und welche die Bedienoberfläche bestimmt.

### Bezugszeichenliste

- 1: Pumpenaggregat
- 2: Kreiselpumpen
- 3: Elektromotoren
- 4: Frequenzumrichter
- 5: elektronische Steuerung
- 6: Saugleitung
- 7: Druckleitung
- 8: Satellit
- 9: Mobilfunk
- 10: cloud/Server
- 11: Bedienperson
- 12: Bediengerät
- 13: Abstand
- 14: Datenkommunikation
- 15: Display
- 16: Anzeigefeld
- 21-28: Schritte im Ablaufdiagramm

## Patentansprüche

1. Verfahren zum Autorisieren einer Datenkommunikation zwischen einer elektronisch gesteuerten Vorrichtung (1), insbesondere einem elektronisch gesteuerten Pumpenaggregat (1), und einem Bediengerät (12), welches zur drahtlosen Kommunikation mit der Vorrichtung (1) ausgebildet ist, unter Verwendung eines externen datennetzgebundenen Servers (10),
a) bei dem die Einbaustandortdaten (GPS 1) der Vorrichtung über das Datennetz zu dem Server (10) übermittelt werden,
b) bei dem ein Identifizierungscode des Bediengerätes (12) und die Standortdaten (GPS 2 oder 3) des Bediengerätes (12) über das Datennetz zu dem Server (10) übermittelt werden,
c) bei dem serverseitig anhand des Identifizierungscodes ermittelt wird, ob das Bediengerät (12) zur Datenkommunikation mit der Vorrichtung (1) vorgesehen ist,
d) bei dem serverseitig anhand der Standortdaten ermittelt wird, ob das Bediengerät (12) in einem vorbestimmten räumlichen Bereich (A) zu der Vorrichtung (1) befindlich ist und
e) bei dem serverseitig eine Datenkommunikation (14) zwischen der Vorrichtung (1) und dem Bediengerät (12) zumindest zeitweise freigegeben wird, wenn die Ermittlungen c) und d) mit positivem Ergebnis abgeschlossen worden sind.

2. Verfahren nach Anspruch 1, bei dem zu a) auch ein Identifizierungscode der Vorrichtung (1) über das Datennetz zu dem Server (10) übermittelt wird.

3. Verfahren nach Anspruch 1 oder 2, bei dem die Einbaustandortdaten (GPS 1) mittels eines Navigationssatellitensystems, insbesondere des NAVSTAR-GPS, pumpenaggregatseitig ermittelt oder manuell an der Vorrichtung eingegeben werden und bei dem die Standortdaten (GPS 2 oder 3) des Bediengerätes (12) mittels eines Navigationssatellitensystems, insbesondere des NAVSTAR-GPS, ermittelt werden.

4. Verfahren nach Anspruch 3, bei dem die Standortdaten (GPS) durch WLAN-Netzortung und/oder Mobilfunknetzortung alternativ oder ergänzend ermittelt werden.

5. Verfahren nach einem der vorhergehenden Ansprüche, bei dem zur Ermittlung von d) serverseitig anhand der Einbaustandortdaten (GPS 1) und der Standortdaten (GPS 2 oder 3) des Bediengeräts (12) der Abstand zwischen Vorrichtung (1) und Bediengerät (12) ermittelt wird und weiter ermittelt wird, ob der Abstand innerhalb eines zuvor festgelegten Maximalabstandes (13) liegt.

6. Verfahren nach einem der vorhergehenden Ansprüche, bei dem die Einbaustandortdaten (GPS 1) und/oder die Standortdaten (GPS 2 oder 3) des Bediengeräts (12) sowie Daten über Genauigkeit der Standortdaten an den Server (10) und/oder das Bediengerät (12) übermittelt werden, wobei serverseitig oder bediengerätseitig der räumliche Bereich (A) zur Ermittlung von d), insbesondere der Maximalabstand (13) in Abhängigkeit der Genauigkeit der übermittelten Standortdaten (GPS 1-3) festgelegt bzw. angepasst wird.

7. Verfahren nach einem der vorhergehenden Ansprüche, bei dem serverseitig eine Datenbank mit den Identifizierungscodes der Vorrichtungen (1) und mit den Identifizierungscodes der Bediengeräte (12) angelegt ist, in welcher die zur Datenkommunikation vorgesehenen Zuordnungen angegeben sind, wobei die Zuordnungen der Bediengeräte (12) in Gruppen gebildet sind, wobei eine übergeordnete Gruppe die Freigabe der Datenkommunikation der Vorrichtung (1) mit dem Bediengerät an sich definiert und mindestens eine untergeordnete Gruppe die Datenkommunikation qualitativ festlegt.

8. Verfahren nach Anspruch 7, bei dem eine untergeordnete Gruppe die Datenkommunikation auf die Anzeige und Abfrage von Daten der Vorrichtung (1) beschränkt und eine weitere untergeordnete Gruppe die Datenkommunikation zur Einstellung der Vorrichtung (1) zulässt.

9. Verfahren nach einem der Ansprüche 7 oder 8, bei welchen den Gruppen Zugangsprioritäten zugeordnet sind.

10. Verfahren nach einem der vorhergehenden Ansprüche, bei dem die Ermittlungen c) und d) in zeitlichen Abständen wiederholt werden, wonach die Datenkommunikation freigegeben wird, unterbrochen wird oder gesperrt bleibt.

11. Verfahren nach einem der vorhergehenden Ansprüche, bei dem die Datenkommunikation für ein vorbestimmtes Zeitintervall freigegeben und danach automatisch unterbrochen wird.

12. Verfahren nach einem der vorhergehenden Ansprüche, bei dem die Vorrichtung (1) beim Betrieb in vorbestimmten zeitlichen Abständen ihren Identifizierungscode und ihre Einbaustandortdaten (GPS 1) an den Server (10) sendet.

13. Verfahren nach einem der vorhergehenden Ansprüche, bei dem die Datenkommunikation zwischen Bediengerät (12) und Vorrichtung (1) unmittelbar drahtlos optisch, akustisch oder per Funk erfolgt.

14. Verfahren nach einem der vorhergehenden Ansprüche, bei dem die Datenkommunikation zwischen Vorrichtung (1) und Bediengerät (12) über den Server (10), vorzugsweise drahtlos per Funk erfolgt.

15. Verfahren nach einem der vorhergehenden Ansprüche, bei dem der räumliche Bereich (A), insbesondere der Abstand (13), in dem das Bediengerät (12) zur Vorrichtung (1) befindlich sein muss, um eine Ermittlung d) mit positivem Ergebnis abzuschließen, entweder vorrichtungsseitig oder serverseitig festgelegt ist und insbesondere einstellbar ist.

16. Verfahren nach einem der vorhergehenden Ansprüche, bei dem als Bediengerät (12) ein Smartphone, Tablet oder Notebook verwendet wird, auf dem eine Softwareapplikation zur verfahrensgemäßen Kommunikation mit dem Server (10) und der Vorrichtung (1) installiert ist, wobei der Identifizierungscode in der Softwareapplikation festgelegt oder gebildet wird und die Standortdaten (GPS 1 oder 3) über mindestens einen im Bediengerät (12) installierten oder daran angeschlossenen Empfänger ermittelt werden.

17. Elektronisch gesteuertes Pumpenaggregat (1) mit einer Steuerelektronik (5) mit mindestens einem Elektromotor (3) und mit mindestens einer davon angetriebenen Pumpe (2), insbesondere einer Kreiselpumpe (2), mit Mitteln zur Datenkommunikation mit mindestens mit einem externen netzwerkgebundenen Server (10), **dadurch gekennzeichnet, dass** Mittel zur Positionsbestimmung pumpenaggregatseitig vorgesehen sind.

18. Pumpenaggregat nach Anspruch 16, **dadurch gekennzeichnet, dass** die Mittel zur Positionsbestimmung einen GPS-Empfänger und/oder einen WLAN-Empfänger und/oder einen Mobilfunkempfänger aufweisen.

19. Pumpenaggregat nach Anspruch 17, **dadurch gekennzeichnet, dass** die Steuerelektronik (5) zur Eingabe von Positionsdaten und/oder Bereichsgrößen ausgebildet ist.
